# EUROPÄISCHE PATENTSCHRIFT

(11) **EP 3 942 140 B1**
(45) Veröffentlichungstag und Bekanntmachung des Hinweises auf die Patenterteilung: **08.01.2025**
(21) Anmeldenummer: 20714151.6
(22) Anmeldetag: 18.03.2020
(51) Int. Cl.: E06B 3/58, E06B 3/263, E06B 3/66

(54) **RAHMENKONSTRUKTION FÜR EIN FENSTER, EINE TÜR ODER EINE FESTVERGLASUNG**
FRAME STRUCTURE FOR A WINDOW, A DOOR OR A FIXED GLAZING
STRUCTURE FORMANT CADRE POUR FENÊTRE, PORTE OU VITRAGE FIXE

(30) Priorität: 20.03.2019 DE 102019203788
(43) Veröffentlichungstag der Anmeldung: 26.01.2022
(73) Patentinhaber: Schulz, Harald, 86381 Krumbach (DE)
(72) Erfinder: Schulz, Harald, 86381 Krumbach (DE)
(74) Vertreter: Hoffmann Eitle
(86) Internationale Anmeldenummer: PCT/EP2020/057423
(87) Internationale Veröffentlichungsnummer: WO 2020/187977

(56) Entgegenhaltungen:
- US-A1- 2014 007 396
- US-A1- 2018 313 100

## Beschreibung

### Gebiet der Erfindung

Die Erfindung betrifft eine Rahmenkonstruktion für ein Fenster, eine Tür oder eine Festverglasung umfassend ein Rahmenprofil sowie eine Vakuumisolierglaseinheit.

### Stand der Technik

Vakuumisoliergläser finden zunehmend Verwendung in Rahmenkonstruktionen, da sie eine sehr gute Wärmedämmung besitzen. Vakuumisolierglaseinheiten weisen dabei Ug-Werte auf, die unter 1.0 W/(m²K) liegen und oftmals sogar zwischen 0.4 W/(m²K) und 0.5 W/(m²K) liegen.

US 2014/007396 A1 und US 2018/313100 A1 beschäftigt sich mit dem Austausch von Isolierglas durch Vakuumisolierglas.

Bereits aufgrund der gegenüber Standard Isoliergläsern erheblich geringeren Gesamtdicke von Vakuumisoliergläsern besitzen Rahmenkonstruktionen für Vakuumisoliergläser einen unterschiedlichen konstruktiven Aufbau im Vergleich zu Rahmenkonstruktionen für Standard Isoliergläser. Vakuumisolierglaseinheiten weisen allerdings zwei Probleme auf, die beide durch die Ausbildung des Randverbunds üblicher Vakuumisolierglaseinheiten hervorgerufen werden. Übliche Vakuumisolierglaseinheiten weisen nämlich zwei in einem relativ geringen Abstand zueinander angeordnete Glaselemente auf, zwischen denen ein Scheibenzwischenraum besteht, der evakuiert ist. Die beiden Glasscheiben werden durch mehrere Stützen auf dem gewünschten Abstand gehalten, der bei ca. 0,15mm bis 0,7mm liegt. Um den Unterdruck im Scheibenzwischenraum aufrechterhalten zu können, muss ein vakuumdichter Randverbund zwischen den Glasscheiben vorgesehen sein. Üblicherweise besteht der Randverbund aus Metall (Messing oder Edelstahl) oder Keramik. Aufgrund des Randverbunds von Vakuumisolierglaselementen mit dessen geringer Dicke ergeben sich hohe lineare Wärmedurchgangskoeffizienten von Rahmenprofil und eingebauter Glaseinheit. Hohe lineare Wärmedurchgangskoeffizienten im Randbereich bedeuten eine Verschlechterung der Gesamtwärmedämmung der Vakuumisolierglaseinheit.

Im Stand der Technik wird diesem Problem dadurch Rechnung getragen, dass auf eine gute Wärmedämmung auf beiden Seiten der Vakuumisolierglaseinheit geachtet wird.

Die zweite Schwierigkeit besteht darin, dass durch den hohen linearen Wärmedurchgangskoeffizienten die Oberflächentemperatur im Übergang zwischen dem Rahmenprofil und der Vakuumisolierglaseinheit auf der Raumseite absinkt. Dieser Effekt tritt bei jedem Rahmenwerkstoff auf, ist aber besonders ausgeprägt für Rahmenprofile, die im Vergleich zu Metall eine schlechte Wärmeleitung besitzen.

Zur Bewertung eines möglichen Tauwasserrisikos wird ausgehend von gewählten normierten Randbedingungen die Oberflächentemperatur im Übergang zwischen dem Rahmenprofil und der Vakuumisolierglaseinheit bestimmt. Die Standard-Randbedingungen sind dabei eine Außenlufttemperatur von -10°C sowie eine Innenraumtemperatur von +20°C. In die Berechnung der Oberflächentemperatur im Übergang zwischen Rahmeneinheit und der Vakuumisolierglaseinheit gehen zudem die normierten Übergangswiderstände ein. Dabei ist zu bestimmen, ob bei Standardinnenraumbedingungen bei +20°C und einer relativen Luftfeuchte von 50% mit Tauwasser zu rechnen ist. Eine Taupunktunterschreitung liegt dann vor, wenn die bestimmte Oberflächentemperatur im Übergang zwischen dem Rahmenprofil und der Vakuumisolierglaseinheit 9,3°C unterschreitet.

Ab einer relativen Luftfeuchte von 80% kann es zudem bei einer Temperatur unter 12,6°C zusätzlich zur Schimmelbildung kommen.

### Darstellung der Erfindung

Ausgehend von den oben geschilderten Problemstellungen einer möglichen Taupunktunterschreitung der Oberflächentemperatur im Übergang zwischen dem Rahmenprofil und einer Vakuumisolierglaseinheit liegt der Erfindung die Aufgabe zugrunde, eine Rahmenkonstruktion mit einer Vakuumisolierglaseinheit vorzuschlagen, bei der sich auch bei einem Rahmenprofil aus einem Material mit geringer Wärmeleitfähigkeit die Gefahr einer Tauwasserbildung verringern lässt.

Diese Aufgabe wird durch eine Rahmenkonstruktion für ein Fenster, eine Tür oder eine Festverglasung mit den Merkmalen des Anspruchs 1 gelöst. Bevorzugte Ausführungsformen folgen aus den übrigen Ansprüchen.

Die erfindungsgemäße Rahmenkonstruktion für ein Fenster, eine Tür oder eine Festverglasung umfasst ein Rahmenprofil, dessen Material eine Wärmeleitfähigkeit von weniger von 1.0 W/mK besitzt und einen Flügelrahmen sowie einen Blendrahmen umfasst. Weiterhin umfasst die Rahmenkonstruktion eine mit einem Glaseinstand in der Rahmenkonstruktion gehaltene Vakuumisolierglaseinheit, wobei die Vakuumisolierglaseinheit einen Wärmedurchgangskoeffizienten von höchstens 1.0 W/(m²K) besitzt. Die Rahmenkonstruktion ist dadurch gekennzeichnet, dass es raumseitig im Bereich des Glaseinstands ein thermisches Ankoppelelement mit einer gegenüber dem Material des Rahmenprofils des Flügelrahmens um mindestens den Faktor 10 und bevorzugt um den Faktor 20 erhöhten Wärmeleitfähigkeit, und besonders bevorzugt um den Faktor 300 erhöhten Wärmeleitfähigkeit umfasst.

Das thermische Ankoppelelement kann sogar bei Verwendung von Aluminium eine um den Faktor 1000 gegenüber einem Rahmenprofil erhöhte Wärmeleitfähigkeit aufweisen.

Die Grundidee der Erfindung besteht darin, Wärme von der Rauminnenseite an den in Bezug auf eine Taupunktunterschreitung kritischen Bereich im Übergang zwischen dem Rahmenprofil und der Vakuumisolierglaseinheit zu transportieren. Durch das erfindungsgemäße Vorsehen eines thermischen Ankopplungselements im Bereich des Glaseinstands lässt sich die raumseitige Oberflächentemperatur im Übergang zwischen dem Rahmenprofil und der Vakuumisolierglaseinheit, der bei der Verwendung einer Innendichtung dem Übergangsbereich zwischen der Innendichtung und der inneren Glasoberfläche entspricht, deutlich anheben. Da es sich bei dem Wärmetransport durch das thermische Ankoppelelement lediglich um eine sehr lokal wirkende Maßnahme handelt, werden die übrigen thermischen Kennwerte, insbesondere die gesamte Wärmedämmung des Glas-Rahmen-Elements sowie der lineare Wärmedurchgangskoeffizient von Rahmenprofil und eingebautem Glaselement kaum verändert.

Weiterhin ist erfindungsgemäß eine äußere Dämmstoffdicke in Wärmestromrichtung mindestens um den Faktor 3, bevorzugt um mindestens den Faktor 4, höher als die Dicke einer Innendichtung.

Der lineare Wärmedurchgangskoeffizient des Randbereichs eines Vakuumisolierglases liegt höher als derjenige von Standard Isoliergläsern. Daher ist, anders ans bei Standard Isoliergläsern, trotz einer thermischen Ankopplung ein Vakuumisolierglas häufig nicht tauwasserfrei zu installieren. Durch das Vorsehen einer entsprechend erhöhten äußeren Dämmstoffdicke in Wärmestromrichtung in Zusammenwirken mit einem Glaseinstand von nicht weniger als 15mm lässt sich die erfindungsgemäße Rahmenkonstruktion auch mit einer Vakuumisolierglaseinheit verwenden.

Die äußere Dämmstoffdicke setzt sich dabei in der Regel aus der Gesamtdicke in Wärmestromrichtung des Rahmenprofils und der Außendichtung zusammen.

Die erfindungsgemäße Rahmenkonstruktion ist vor allen Dingen dann von Interesse, wenn das Material des Rahmenprofils eine Wärmeleitfähigkeit von weniger als 1.0 W/mK besitzt, da bei Rahmenprofilen mit einer geringen Wärmeleitung die Gefahr einer lokalen Taupunktunterschreitung besonders hoch ist.

Nach einer bevorzugten Ausführungsform der Erfindung weist die Rahmenkonstruktion einen raumseitigen Anschlag auf, der in Form einer Glasleiste oder eines festen Anschlags vorgesehen ist, wobei der raumseitige Anschlag das thermische Ankoppelungselement umfasst. Berechnungen haben gezeigt, dass die Integration des thermischen Ankoppelelements in einem raumseitigen Anschlag besonders wirkungsvoll ist. Natürlich spielen auch weitere Faktoren eine Rolle, wie beispielsweise die Gestaltung eines Innendichtungsstreifens, der einen zusätzlichen Wärmewiderstand darstellt und folglich die Wirkung der thermischen Ankoppelung verringert.

Nach einer bevorzugten Ausführungsform der Erfindung besteht das Rahmenprofil des Flügelrahmens aus Holz, Integralschaum, GFK, CK oder thermoplastischen Kunststoffen, insbesondere PVC, PP oder PA. Diese Materialien besitzen eine Wärmeleitfähigkeit von teilweise deutlich unter 1.0 W/mK und können bei der Rahmenkonstruktion nach der Erfindung eingesetzt werden, da die mit Rahmenprofilen aus sehr gut wärmedämmendem Material verbundenen Probleme einer lokalen Taupunktunterschreitung durch das Ankoppelelement gelöst werden können. Das Rahmenprofil des Flügelrahmens kann aber auch ein Verbundprofil aus Holz oder Hartschaum oder aus einem thermoplastischen Kunststoff und Hartschaum sein, wobei das Innenteil des Verbundprofils aus Hartschaum besteht und die Außenseite innen und außen aus Holz oder thermoplastischem Kunststoff bestehen.

Vorzugsweise beträgt der Glaseinstand der Vakuumisolierglaseinheit zwischen 15mm und 25mm. Ein Glaseinstand unter 15mm erhöht das Tauwasserrisiko trotz thermischer Ankopplung. Ein Glasstand zwischen 15mm und 25mm hat sich als besonders geeignet erwiesen, um zum einen die Vakuumisolierglaseinheit fixieren zu können ohne aber einen zu großen Glaseinstand vorzusehen. Ein zu hoher Glaseinstand ist negativ im Hinblick auf die benötigte Rahmenbreite, die aus Gründen des Designs sowie Lichteinfalls nicht zu groß sein sollte. Darüber hinaus ist ein zu hoher Glaseinstand auch negativ in Bezug auf die Gesamtwärmedämmung des Fensters, da der Rahmen immer schlechter wärmedämmend ist als die ungestörte Vakuumisolierglasfläche.

Im Rahmen der gesamten wärmetechnischen Optimierung der erfindungsgemäßen Rahmenkonstruktion hat es sich als vorteilhaft erwiesen, wenn die Rahmenkonstruktion weiterhin ein Dämmelement umfasst, das sich außenseitig im Bereich des Glaseinstands der Vakuumisolierglaseinheit befindet. Ein derartiges Dämmelement stellt eine weitere Maßnahme dar, um den linearen Wärmedurchgangskoeffizienten von Rahmenprofil und eingebautem Vakuumisolierglaselement zu verringern. Das Vorsehen des außenseitig im Bereich des Glaseinstands angeordneten Dämmelements stellt somit eine flankierende Maßnahme dar, um die Gefahr einer Taupunktunterschreitung an der inneren Glasoberfläche im Übergangsbereich zur Innendichtung zu verringern.

Vorzugsweise umfasst das thermische Ankoppelelement zumindest bereichsweise Metall und ist vorzugsweise eine Glasleiste aus Aluminium. Metallische Werkstoffe besitzen eine hohe Wärmeleitfähigkeit, die sich allerdings in einem relativ großen Bereich bewegt. So hat Edelstahl eine Wärmeleitfähigkeit von ca. 15 W/mK, während Aluminium eine Wärmeleitfähigkeit von ca. 160 W/mK besitzt. Allgemein ist Metall aber besonders geeignet, um die thermische Ankoppelung herzustellen. Eine besonders wirkungsvolle Maßnahme ist dabei das Vorsehen einer Glasleiste aus Aluminium mit Hilfe derer der für eine Taupunktunterschreitung gefährdete Bereich auf eine wirkungsvolle Weise an das Rauminnenklima angekoppelt werden kann.

Nach einer alternativen bevorzugten Ausführungsform kann das thermische Ankoppelelement Aluminiumfolie seine, mit der die Glasleiste oder der Anschlag belegt sind. Diese Lösungen ermöglichen das Herstellen einer optisch ansprechenden Lösung, insbesondere wenn eine optisch sichtbare, rauminnenseitige Aluminiumleiste nicht gewünscht ist.

Alternativ kann die Glasleiste bereichsweise oder vollständig mit Metall beschichtet sein.

Nach einer bevorzugten Ausführungsform der Erfindung, ist die Dicke einer Außendichtung in Wärmestromrichtung mindestens 50% größer als die Dicke einer Innendichtung. Auf diese Weise kann zum einen der lineare Wärmedurchgangskoeffizient von Rahmenprofil und Vakuumisolierglaseinheit durch das Vorsehen einer gut isolierenden Außendichtung verringert werden. Zum anderen besitzt eine Innendichtung mit geringer Dicke einen geringeren Wärmedurchgangswiderstand wodurch eine möglichst wirkungsvolle thermische Ankopplung zwischen dem kritischen Bereich in Bezug auf eine Taupunktunterschreitung und dem Rauminnenklima möglich ist.

Schließlich betrifft die Erfindung auch eine Gebäudehülle umfassend eine erfindungsgemäße Rahmenkonstruktion.

### Kurze Beschreibung der Zeichnungen

In den nachfolgenden Zeichnungen wird die Erfindung rein beispielhaft anhand mehrerer Varianten einer Rahmenkonstruktion am Beispiel eines öffenbaren Fensters erläutert. Dabei zeigen:
- Fig. 1: einen Schnitt durch ein Fensterprofil nach einer ersten Ausführungsform der Erfindung;
- Fig. 2: einen Schnitt durch ein Fensterprofil nach einer zweiten Ausführungsform der Erfindung;
- Fig. 2a: eine abgewandelte Variante der Ausführungsform nach Fig. 2;
- Fig. 3: einen Schnitt durch ein Fensterprofil nach einer dritten Ausführungsform der Erfindung;
- Fig. 4: einen Schnitt durch ein Fensterprofil nach einer vierten Ausführungsform der Erfindung;
- Fig. 4a: eine abgewandelte Variante der Ausführungsform nach Fig. 4;
- Fig. 5: einen Schnitt durch ein Fensterprofil nach einer fünften Ausführungsform der Erfindung ähnlich der ersten Ausführungsform der Erfindung;
- Fig. 6: einen Schnitt durch ein Fensterprofil nach einer sechsten Ausführungsform der Erfindung unter Verwendung eines Blendrahmens und Flügelrahmens aus Holz oder Hartschaum;
- Fig. 7: einen Schnitt durch ein Fensterprofil nach einer siebten Ausführungsform der Erfindung unter Verwendung eines Blendrahmens und Flügelrahmens aus Holz oder Hartschaum;
- Fig. 7a: eine abgewandelte Variante der Ausführungsform nach Fig. 7;
- Fig. 8: eine achte Ausführungsform der Erfindung ähnlich zu der Ausführungsform nach Fig. 3, jedoch unter Verwendung eines Flügelrahmens und Blendrahmens aus Holz oder Hartschaum;
- Fig. 9: eine neunte Ausführungsform der Erfindung ähnlich zu der Ausführungsform nach Fig. 4, jedoch unter Verwendung eines Flügelrahmens und Blendrahmens aus Holz oder Hartschaum;
- Fig. 10: eine zehnte Ausführungsform der Erfindung ähnlich der Ausführungsform nach Fig. 9, jedoch ohne ein außenseitig angeordnetes Dämmelement unterhalb der Außendichtung;
- Fig. 11: eine elfte Ausführungsform der Erfindung ähnlich zu der Ausführungsform nach Fig. 10, ebenfalls ohne ein außenseitig angeordnetes Dämmelement unterhalb der Außendichtung; und

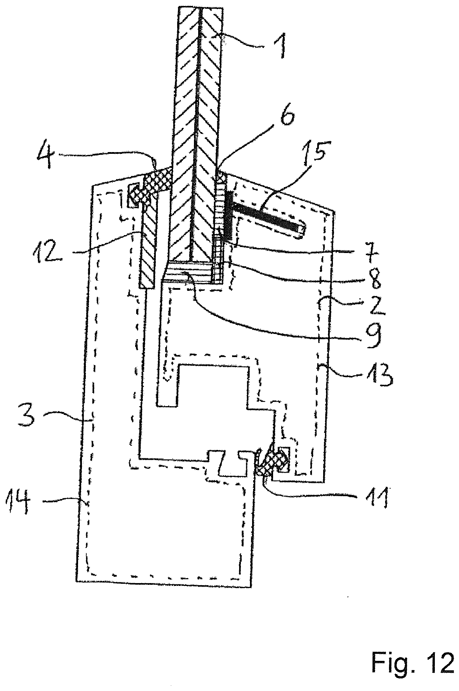

- Fig. 12: eine zwölfte Ausführungsform der Erfindung ähnlich der Ausführungsform nach Fig. 7.

### Beschreibung der bevorzugten Ausführungsformen

In den nachfolgenden Figuren werden verschiedene Beispiele dargestellt, auf welche Weise Vakuumisolierglaseinheiten in einer Rahmenkonstruktion für ein Fenster, eine Tür oder eine Festverglasung mit Rahmenprofilen mit niedriger Wärmeleitfähigkeit integriert werden können.

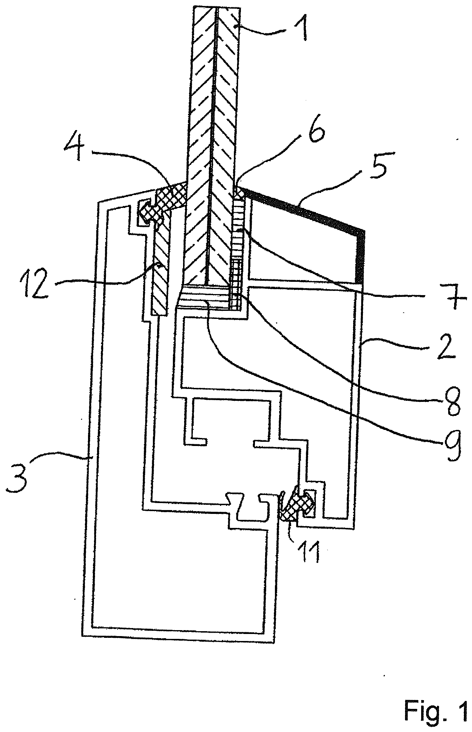

Die Hohlprofile nach den Fig. 1 bis 5 zeigen die in der Regel erforderlichen Aussteifungselemente im Inneren dieser entweder durch Pultrusion (gilt für GFK und CFK) oder Extrusion (gilt für alle Thermoplaste) erzeugten Querschnitte nicht.

In Fig. 1 ist ein Schnitt durch eine Rahmenkonstruktion für ein Fenster oder eine Tür dargestellt, die eine Vakuumisolierglaseinheit 1 besitzt. Die Vakuumisolierglaseinheit 1 ist dabei in herkömmlicher Weise gestaltet. Die Vakuumisolierglaseinheit 1 ist mit Hilfe einer Verklebung 7 an einem Flügelprofil 2 befestigt. Sowohl das Flügelprofil 2 wie auch das Blendrahmenprofil 3 sind Profile, die aus Kunststoff extrudiert oder pultrudiert sind. Insbesondere kommen für das Flügelprofil 2 sowie das Blendrahmenprofil 3 thermoplastische Kunststoffe, insbesondere PVC, PP oder PA, aber auch pultrudierte Kunststoffe wie GFK oder CFK zum Einsatz.

Die Vakuumisolierglaseinheit 1 wird durch ein umlaufendes Elastomerprofil 9 lagefixiert, das ggf. auch in Teilbereichen Verglasungsansätze aufweisen kann. In üblicher Weise befindet sich zwischen der Verklebung 7 und dem Klotz 9 ein Hinterfüllband 8. Auf der Rauminnenseite ist eine innere Verglasungsdichtung 6 vorgesehen, während auf der Außenseite eine Außendichtung 4 vorgesehen ist.

Um den linearen Wärmedurchgangskoeffizienten im Glaseinstandsbereich zu verringern, ist zusätzlich am Blendrahmenprofil 3 im Bereich des Glaseinstands ein wärmedämmender Schaumstoff 12 vorgesehen. Zwischen dem Blendrahmenprofil 3 und dem Flügelprofil 2 ist zudem eine innere Anschlagdichtung 11 vorgesehen.

Um die Gefahr einer Tauwasserbildung zu verringern, ist raumseitig ein Anschlag 5 vorgesehen, der ein thermisches Ankoppelelement darstellt und aus einem Material besteht, dessen Wärmeleitfähigkeit mindestens um den Faktor 10, bevorzugt um den Faktor 20 höher ist als die Wärmeleitfähigkeit des Kunststoffmaterials des Flügelprofils 2. Wenn ein Material mit besonders hoher Wärmeleitfähigkeit gewünscht ist, kann beispielsweise der Anschlag 5 aus Aluminium bestehen.

Durch das Vorsehen des Aluminium-Elements 5 mit hoher Wärmeleitfähigkeit erfolgt eine Ankopplung des Bereichs der Innendichtung 6 im Übergang zwischen Glaseinstand und freier Glasfläche an das Rauminnenklima, wodurch die Gefahr einer Taupunktunterschreitung dort zumindest verringert wird.

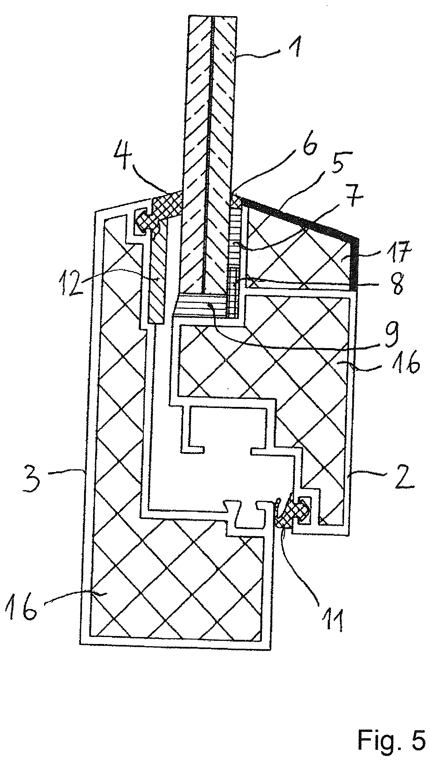

Zusätzlich zu der in Fig. 1 dargestellten Ausführungsform können die Hohlkammern des Flügelprofils 2 sowie das Blendrahmenprofil 3 mit einem wärmedämmenden Schaumstoff ausgeschäumt sein, wie in Fig. 5 dargestellt ist.

Darüber hinaus kann auf das Vorsehen des wärmedämmenden Schaumstoffs 12 verzichtet werden.

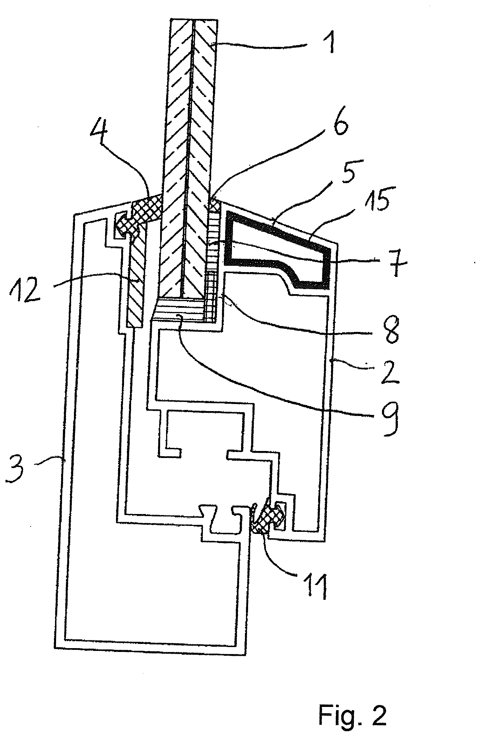

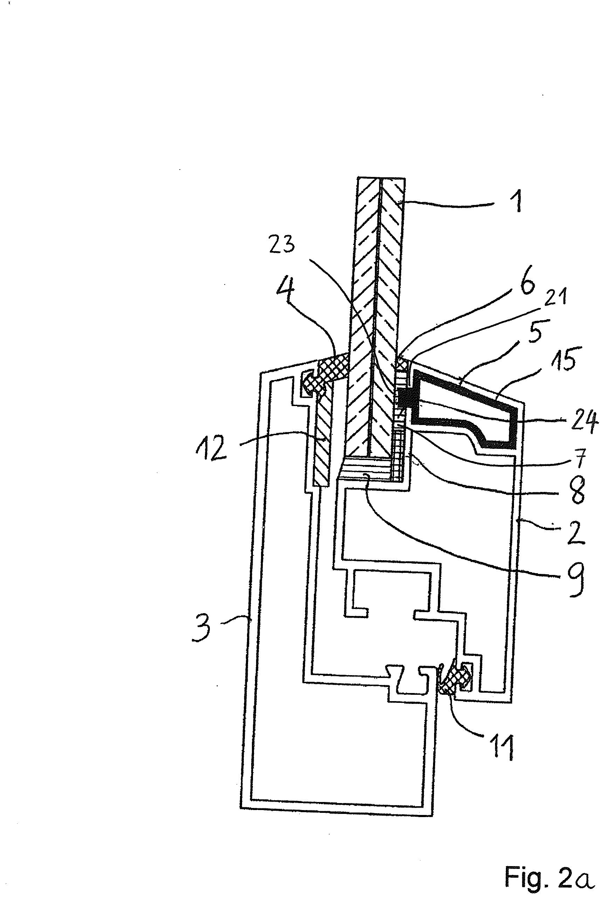

Die Ausführungsform nach Fig. 2 ist ähnlich zu derjenigen nach Fig. 1 und kann prinzipiell in denselben Varianten in Bezug auf das Ausschäumen mit wärmedämmendem Kunststoff sowie das Weglassen des wärmedämmenden Schaumstoffs 12 ausgestaltet sein. Im Unterschied zu der Ausführungsform nach Fig. 1 ist der Anschlag innen unterschiedlich gestaltet. Der Anschlag 5 innen ist einstückig mit dem Flügelprofil 2 ausgebildet. Darüber hinaus ist ein thermisches Ankoppelelement 15 vorgesehen, das in Form einer Metalleinlage im Hohlraum ausgestaltet ist. Die Ausgestaltung nach Fig. 2 besitzt gegenüber derjenigen nach Fig. 1 insbesondere einen Vorteil in Bezug auf die optische Ausgestaltung, da auf der Rauminnenseite keine separate Glasleiste vorgesehen ist, die zudem auch spezielle Maßnahmen beim Lackieren erfordert. Die Metalleinlage 15 bietet den Vorteil, dass sie sich im inneren eines Hohlraums des Flügelprofils 2 befindet, das Flügelprofil zudem im Befestigungsbereich der Vakuumisolierglaseinheit versteift und ebenso als thermisches Ankopplungselement dient, da die durch die relativ dünne Außenwandung des Flügelprofils transportierte Wärme mit Hilfe der gut Wärme leitenden Metalleinlage 15 in den Bereich der Innendichtung 6 sowie der Verklebung 7 transportiert wird.

Fig. 2a zeigt eine abgewandelte Ausführungsform ähnlich zu der nach Fig. 2. Die Metalleinlage im Hohlraum dient wieder als Ankopplungselement 5, erstreckt sich aber mit einer Rippe 24 durch eine Öffnung 21 im Flügelprofil 2 aus dem Hohlraum hinaus und in Richtung der Vakuumisolierglaseinheit 1, die das Ankoppelelement allerdings nicht berührt, so dass sich ein Spalt 23 zwischen dem Ankoppelelement 5 und der Vakuumisolierglaseinheit 1 innerhalb der Verklebung 7 besteht. Die Dicke des Spalts 23 kann etwa 1mm betragen.

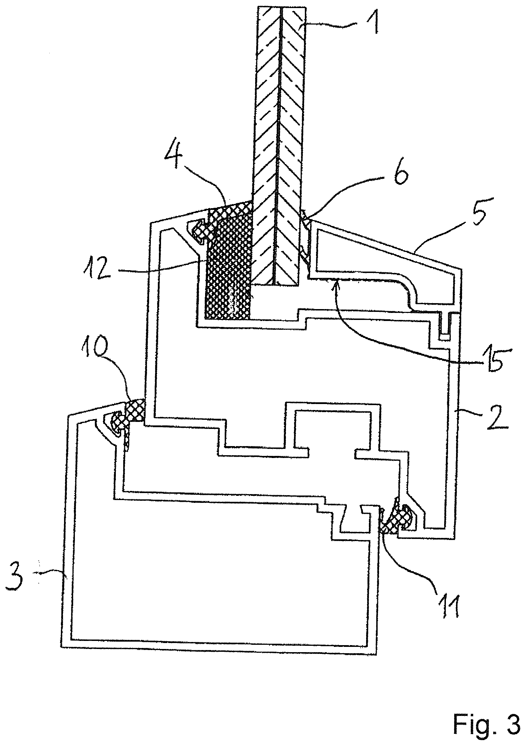

Die Ausgestaltung nach Fig. 3 zeigt eine etwas unterschiedliche Ausgestaltung des Flügelrahmens 2 sowie des Blendrahmens 3, weshalb neben der Anschlagdichtung 11 innen auch eine Anschlagdichtung 10 außen vorgesehen ist. Die unterschiedliche Gestaltung des Flügelprofils sowie Blendrahmenprofils ist jedoch für das Verständnis der Erfindung unerheblich. Im Unterschied zu den Ausgestaltungen nach Figuren 1 und 2 wird die Vakuumisolierglaseinheit 1 klemmend zwischen der Außendichtung 4 sowie der Innendichtung 6 gehalten, wobei an der Außenseite wieder ergänzend ein Dämmelement in Form eines wärmedämmenden Schaums 12 vorgesehen ist. Auf die Glasleiste 5 ist bei der Ausführungsform nach Fig. 3 ein thermisches Ankoppelelement 15 in Form einer Aluminiumfolie aufgebracht, damit eine thermische Ankopplung der zur Innenseite weisenden Fläche der Vakuumisolierglaseinheit 1 im Bereich des Glaseinstands entsteht.

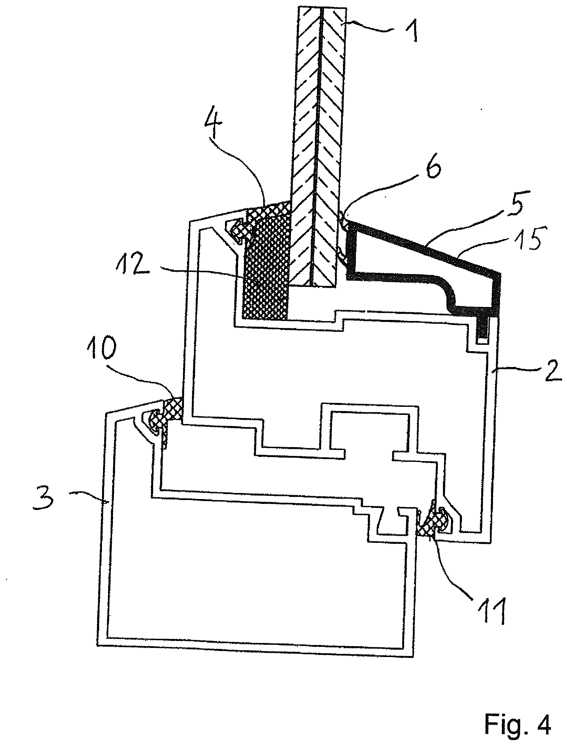

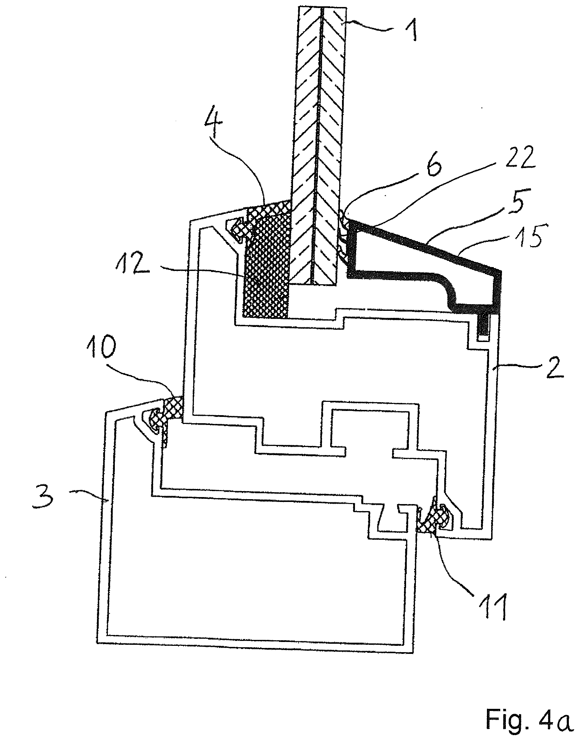

Die Ausgestaltung nach Fig. 4 unterscheidet sich von derjenigen nach Fig. 3 lediglich dahingehend, dass die Glasleiste 5 vollständig das thermische Ankoppelungselement 15 darstellt, da diese aus Metall und bevorzugt Aluminium hergestellt ist.

Die in Fig. 4a dargestellte Ausführungsform unterscheidet sich von derjenigen nach Fig. 4 durch das zusätzliche Vorsehen eines Federelements 22 aus Metall, das vorzugsweise einstückig mit dem Ankoppelelement 5 ausgebildet ist und federnd an der Vakuumisolierglaseinheit 1 anliegt. Dabei ist darauf zu achten, dass das Federelement 22 ausreichend biegsam ist, um elastisch an der Vakuumisolierglaseinheit 1 anzuliegen, diese aber nicht zu beschädigen. Das Ankoppelelement besteht vorzugsweise aus Aluminium.

Auch bei den Ausgestaltungen nach Figuren 3, 4 and 4a können die Hohlräume des Flügelprofils sowie des Blendrahmenprofils mit einem wärmedämmenden Schaumstoff gefüllt sein, um die gesamte Wärmedämmung noch weiter zu verbessern.

In der Ausgestaltung nach Fig. 5 ist ein Beispiel gezeigt, in dem die Hohlräume des Flügelprofils 2 sowie des Blendrahmenprofils 3 mit wärmedämmendem Schaumstoff 16 ausgeschäumt sind. Zusätzlich ist auch der Hohlraum zwischen der aus Metall bestehenden Glasleiste 5 und dem Flügelprofil 2 mit Schaum 17 ausgefüllt. Durch das Vorsehen des Dämmelements 12 aus wärmedämmenden Schaumstoff auf der Außenseite sowie des Schaumstoffs 17 auf der Innenseite wird der lineare Wärmedurchgangskoeffizient des jeweiligen Profils weiter herabgesetzt, gleichzeitig aber durch das Vorsehen der Glasleiste 5 aus gut wärmeleitendem Metall die erfindungsgemäße thermische Ankopplung an das Rauminnenklima sichergestellt. In gleicher Weise ist es auch möglich, die Ausführungsform nach Fig. 5 aus Profilen aus Integralschaum herzustellen.

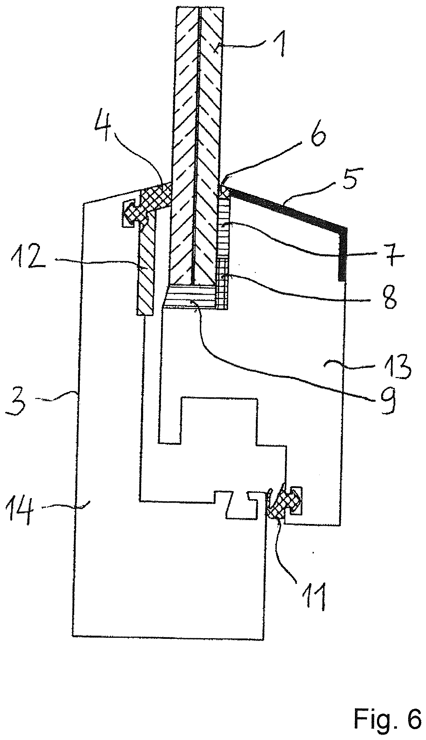

Die Ausführungsform nach Fig. 6 unterscheidet sich von jener nach Fig. 5 lediglich dahingehend, dass sowohl das Flügelprofil wie auch das Blendrahmenprofil aus Holz oder aus Hartschaum oder aus einem Verbund dieser Materialien bestehen. Auf diese Weise lassen sich die thermischen Eigenschaften eines wie in Fig. 5 dargestellten Profils mit ausgeschäumten Kunststoffhohlprofilen für das Flügelprofil sowie Blendrahmenprofil in gleicher Weise erzielen. Bei der geeigneten Auswahl eines Hartschaums können sogar gegenüber den vorhergehenden Ausgestaltungen noch zusätzliche thermische Vorteile erzielt werden.

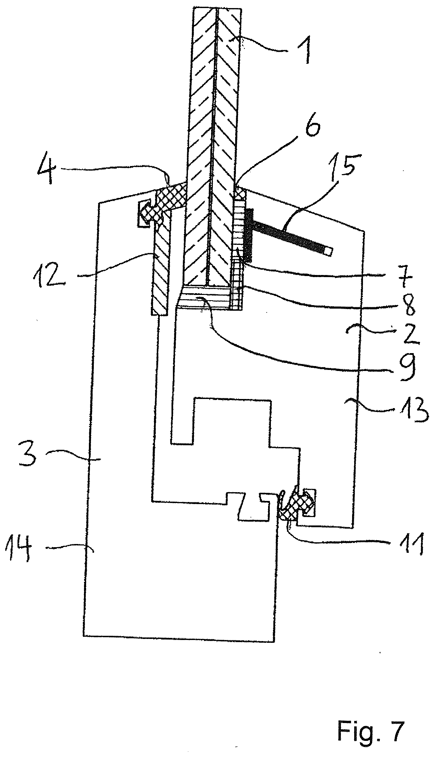

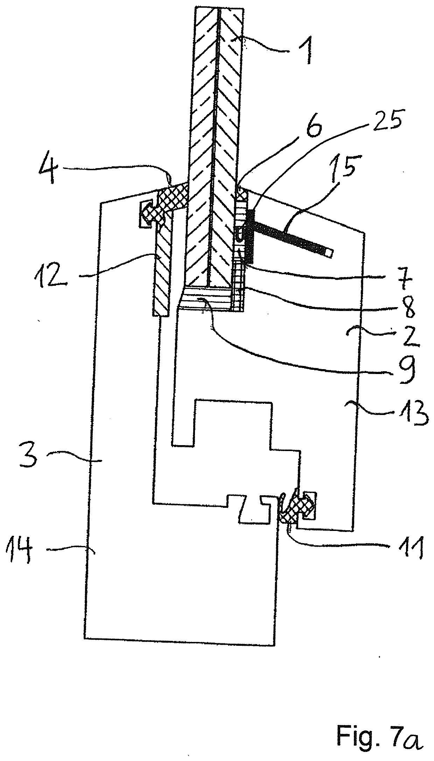

Die Ausgestaltung nach Fig. 6 besitzt allerdings wieder den Nachteil, dass der Anschlag aus Metall auf der Rauminnenseite sichtbar ist und gegebenenfalls auch eine besondere Expertise bei der Lackierung erfordert. Dieses Problem lässt sich durch eine wie in Fig. 7 dargestellte Ausgestaltung lösen, bei der im Bereich des Anschlags innen eine Metalleinlage 15 im Holz oder Hartschaum vorgesehen ist, die das thermische Ankoppelungselement 15 gemäß der Erfindung darstellt. Indem sich, wie in Fig. 7 dargestellt ist, das thermische Ankoppelungselement 15 über einen größeren Teil der Entfernung zwischen der Glasinnenseite und dem raumseitigen Abschluss des Flügelprofils 2 erstreckt, wird der Wärmetransportwiderstand von der Rauminnenseite in Richtung auf die Vakuumisolierglaseinheit 1 im Bereich des Glaseinstands deutlich verringert. Die Lösung nach der Fig. 7 hat den Vorteil, dass beispielsweise im Falle der Gestaltung des Flügelprofils aus Holz das erfindungsgemäß vorgesehene thermische Ankoppelungselement 15 optisch nicht sichtbar hervortritt.

Die Ausführungsform nach Fig. 7a verbessert die thermische Ankopplung gegenüber der Ausführungsform nach Fig. 7 dadurch, dass im Bereich der Verklebung 7 eine separate Ankopplungsfeder 25, in Ausführungsform nach Fig. 7a in Form eines U-förmigen Profils aus Aluminium, vorgesehen ist, die elastisch sowohl am Ankopplungselement 15 wie auch der Vakuumisolierglaseinheit 1 anliegt und die Wärmeleitung zu Vakuumisolierglaseinheit gegenüber der Ausgestaltung nach Fig. 7 weiter verbessert. Alternativ könnte auch ein einstückig mit dem Ankopplungselement 15 verbundenes

Federelement wie in Fig. 4a gezeigt anstelle des separaten U-förmigen Profils verwendet werden.

Dieses Konzept kann auch bei einem Hohlprofil aus Kunststoff realisiert werden, wie es in den Fig. 1 bis 5 beispielhaft gezeigt ist.

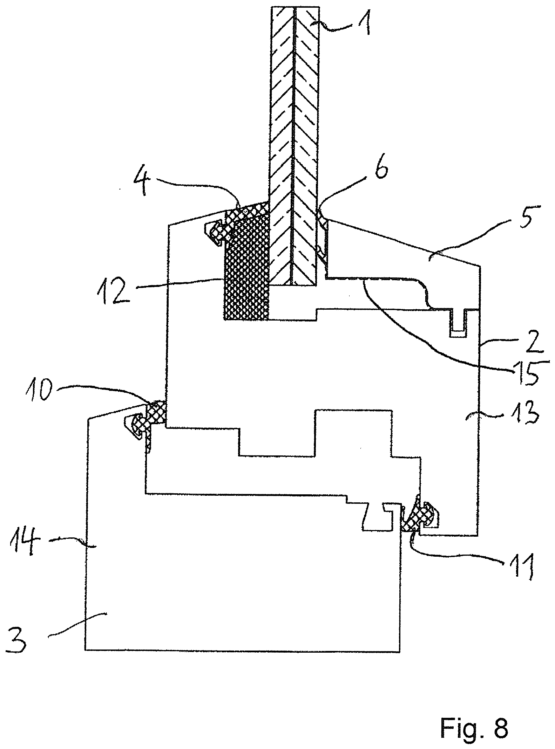

Bei der Ausführungsform nach Fig. 8 werden ebenfalls ein Flügelprofil 13 aus Holz oder Hartschaum sowie ein Blendprofil 14 aus Holz oder Hartschaum eingesetzt. Die am Flügelprofil über eine Nut-Feder-Verbindung befestigte Glasleiste 5 besteht ebenfalls aus Holz oder Hartschaum und ist mit einem thermischen Ankoppelelement 15 in Form einer auf der Glasleiste 5 aufgebrachten Metallschicht versehen. Bei dem thermischen Ankoppelelement nach Fig. 8 kann es sich beispielsweise um eine Aluminiumfolie handeln.

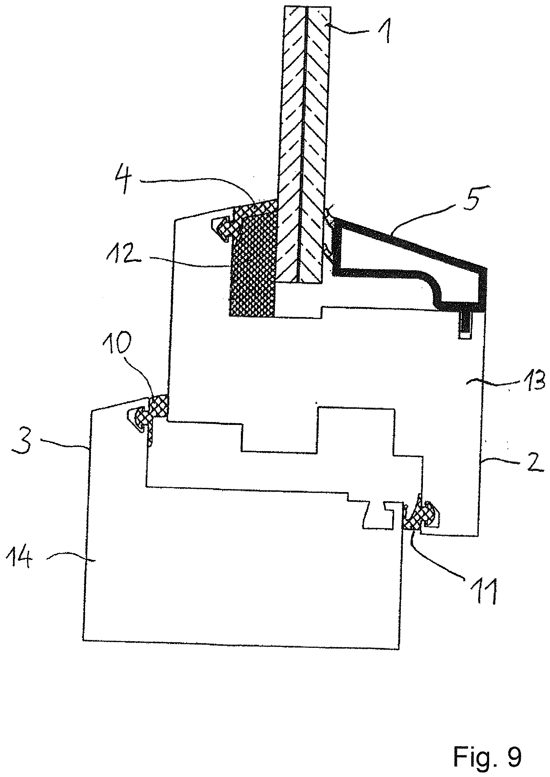

Auch bei den Ausführungsformen nach Figuren 6 bis 8 wie auch der nachfolgenden Fig. 9 kann jeweils der außenseitig an der Vakuumisolierglaseinheit 1 vorgesehene wärmedämmende Schaumstoff 12 entfallen, zumal die Dämmwirkung der Luftschicht weiterhin dort vorhanden ist.

Die Ausführungsform nach Fig. 9 entspricht im Wesentlichen derjenigen nach Fig. 4 und unterscheidet sich von dieser darin, dass anstelle der bei der Ausführungsform nach Fig. 4 als Hohlprofil ausgestaltete Profile 2 und 3 bei der Ausführungsform nach Fig. 9 das Flügelprofil aus Vollmaterial besteht und aus Holz oder Hartschaum gefertigt ist. Gleiches trifft für das Blendrahmenprofil 14 zu.

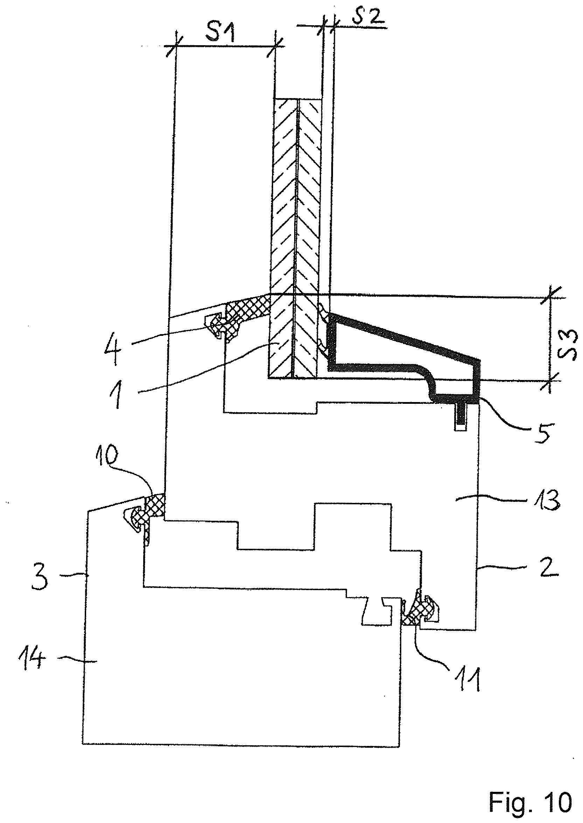

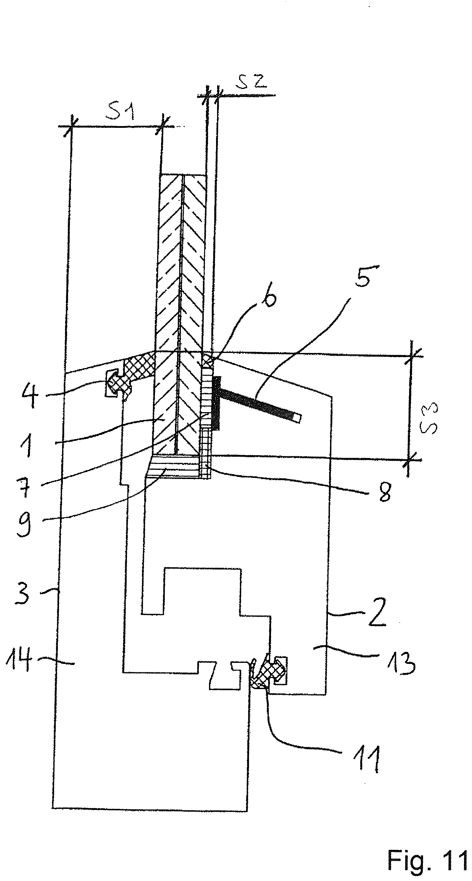

In den Figuren 10 und 11 sind beispielhaft anhand der bereits vorangehend beschriebenen Ausführungsformen nach den Figuren 7 und 9 die zur Außenseite hin angeordneten Dämmelemente 12 nicht vorgesehen. Weiterhin zeigen Figuren 10 und 11 die bei allen Ausführungsformen verwirklichten vorteilhaften geometrischen Abmessungen anhand der in den Figuren 10 und 11 gekennzeichneten relativen Abmessungen für die Dämmstoffdicke außen S1, die Innendichtungsdicke S2 sowie den Glaseinstand S3.

Für den Glaseinstand S3 hat es sich als besonders vorteilhaft gezeigt, wenn dieser zwischen 15mm und 25mm gewählt wird. Ein zu hoher Glaseinstand ist negativ im Hinblick auf die benötigte Rahmenbreite, die aus Gründen des Designs sowie Lichteinfalls nicht zu groß sein sollte. Darüber hinaus ist ein hoher Glaseinstand auch negativ in Bezug auf die Gesamtwärmedämmung des Fensters, da der Rahmen immer schlechter wärmedämmend ist als die ungestörte Vakuumisolierglasfläche.

Ein zu geringer Glaseinstand sollte vermieden werden, da bei einem zu geringen Glaseinstand die Probleme einer Taupunktunterschreitung der Oberflächentemperatur im Übergang zwischen dem Rahmenprofil und der Vakuumisolierglaseinheit noch deutlicher auftreten.

Weiterhin ist es vorteilhaft, wenn die Innendichtungsdicke S2 gering gewählt wird, da eine Innendichtung mit relative guter Wärmedämmung insbesondere bei denjenigen Ausgestaltungen, bei denen die Vakuumisolierglaseinheit zwischen einer Außendichtung 4 sowie eine Innendichtun 6 geklemmt ist, einen in Reihe geschalteten Wärmetransportwiderstand darstellt, der die gewünschte Wirkung des thermischen Ankoppelelements reduziert. Je geringer somit die Innendichtungsdicke S2 ist, desto wirkungsvoller ist das thermische Ankoppelelement, da der durch dieses ermöglichte Wärmefluss nur auf einen geringeren Widerstand in Form der inneren Verglasungsdichtung 6 stößt, bevor er den in Bezug auf eine mögliche Taupunktunterschreitung besonders kritischen Bereich der Vakuumisolierglaseinheit erreicht. Allerdings sollte die Innendichtungsdicke S2 auch nicht zu gering sein, da bei einer zu geringen Innendichtungsdicke unter etwa 2mm die Glasscheibe zu hart am inneren Anschlag gelagert ist und der notwendige Toleranzausgleich nicht mehr gewährleistet werden kann. Wenn neben dem Innendichtungsstreifen eine Verklebung vorgesehen ist, kann ebenfalls keine zu geringe Innendichtungsdicke, entsprechend der Verklebungsdicke, gewählt werden, weil zu dünne Verklebungen nicht mehr in der Lage sind, temperaturbedingte Dehnungen aufzunehmen, ohne dass es zu einem Abreißen der Verklebung durch Scherung kommen kann.

Schließlich muss die Dämmstoffdicke außen S1 deutlich größer sein als die Innendichtungsdicke S2. Ein Verhältnis S1/S2 > 3 und bevorzugt > 4 ist dabei erforderlich, um in der erfindungsgemäßen Rahmenkonstruktion eine Vakuumisolierglaseinheit einsetzen zu können.

Allen vorangegangenen Ausführungsformen ist gemeinsam, dass ein thermisches Ankoppelelement vorgesehen ist, das bei der erfindungsgemäßen Rahmenkonstruktion raumseitig und im Bereich des Glaseinstands vorgesehen ist und welches dazu dient, einen gezielten Wärmetransport von der Raumatmosphäre hin zu dem für eine mögliche Taupunktunterschreitung kritischen Bereich zu transportieren, der sich im Übergangsbereich zwischen dem Glaseinstand und der rauminnenseitigen Glasfläche der Vakuumisolierglaseinheit befindet.

## Patentansprüche

1. Rahmenkonstruktion für ein Fenster, eine Tür oder eine Festverglasung, umfassend:
- ein Rahmenprofil (2, 3), dessen Material eine Wärmeleitfähigkeit von weniger als 1.0 W/mK besitzt und
- einen Flügelrahmen (2) sowie
- einen Blendrahmen (3) umfasst;
- eine in einem Glaseinstand (S3) der Rahmenkonstruktion gehaltene Vakuumisolierglaseinheit (1); wobei
- die Vakuumisolierglaseinheit (1) einen Wärmedurchgangskoeffizienten Ug von höchstens 1.0 W/(m²K) besitzt;
**dadurch gekennzeichnet, dass**
- die Rahmenkonstruktion raumseitig im Bereich des Glaseinstands ein thermisches Ankoppelelement (5; 15) umfasst mit einer gegenüber dem Material des Rahmenprofils des Flügelrahmens (2) um mindestens den Faktor 10 und bevorzugt um den Faktor 20 erhöhten Wärmeleitfähigkeit und besonders bevorzugt um den Faktor 300 erhöhten Wärmeleitfähigkeit; und
- eine äußere Dämmstoffdicke (S1) in Wärmestromrichtung mindestens um den Faktor 3, bevorzugt mindestens um den Faktor 4, größer ist als die Dicke (S2) einer Innendichtung (6).

2. Rahmenkonstruktion nach Anspruch 1, wobei die Rahmenkonstruktion einen raumseitigen Anschlag aufweist, der in Form einer Glasleiste (5) oder eines festen Anschlags vorgesehen ist, wobei der raumseitige Anschlag das thermische Ankoppelelement (15) umfasst.

3. Rahmenkonstruktion nach Anspruch 1 oder 2, wobei das Rahmenprofil des Flügelrahmens (2) aus Holz, Hartintegralschaum, GFK, CFK oder thermoplastischem Kunststoff, insbesondere PVC, PP oder PA besteht, oder aus einem Verbundprofil aus Holz und Hartschaum oder aus einem Verbundprofil aus einem thermoplastischen Kunststoff und Hartschaum besteht.

4. Rahmenkonstruktion nach einem der vorhergehenden Ansprüche,
**dadurch gekennzeichnet, dass**
der Glaseinstand (S3) der Vakuumisolierglaseinheit (1) zwischen 15mm und 25mm beträgt.

5. Rahmenkonstruktion nach einem der vorhergehenden Ansprüche, weiter umfassend ein Dämmelement (12), das außenseitig im Bereich des Glaseinstands der Vakuumisolierglaseinheit (1) angeordnet ist.

6. Rahmenkonstruktion nach einem der vorhergehenden Ansprüche,
**dadurch gekennzeichnet, dass**
das thermische Ankoppelelement (5) zumindest bereichsweise Metall umfasst und vorzugsweise eine Glasleiste (5) aus Aluminium ist.

7. Rahmenkonstruktion nach einem der Ansprüche 1 bis 5, **dadurch gekennzeichnet, dass**
das thermische Ankoppelelement (15) Aluminiumfolie ist, mit der die Glasleiste oder der Anschlag (5) belegt ist.

8. Rahmenkonstruktion nach einem der vorhergehenden Ansprüche,
**dadurch gekennzeichnet, dass**
die Dicke einer Außendichtung (4) in Wärmestromrichtung mindestens 50% größer ist als die Dicke einer Innendichtung (6).

9. Gebäudehülle umfassend eine Rahmenkonstruktion nach einem der vorhergehenden Ansprüche.

## Claims

1. Frame structure for a window, a door or a fixed glazing, comprising:
- a frame profile (2, 3), the material of which has a thermal conductivity of less than 1.0 W/mK and
- a sash or leaf frame (2) as well as
- a fixed frame (3);
- a vacuum insulated glass unit (1) that is held at an insertion depth (S3) of the frame structure (1); wherein
- the vacuum insulated glass unit (1) has a heat transfer coefficient Ug of at most 1.0 W/(m²K);
**characterized in that**
- the frame structure comprises a thermal coupling element (5; 15) on the interior side in the region of the insertion depth with a thermal conductivity that is increased with respect to the material of the frame profile of the sash or leaf frame (2) by a factor of at least 10 and preferably a thermal conductivity that is increased by a factor of 20 and particularly preferably a thermal conductivity that is increased by a factor of 300; and
- an outer insulation thickness (S1) in the heat flow direction that is greater than the thickness (S2) of an inner seal (6) by a factor of at least 3, preferably by a factor of at least 4.

2. Frame structure according to claim 1, wherein the frame structure has an interior-side rebate which is provided in the form of a glazing bead (5) or a fixed rebate, wherein the interior-side rebate comprises the thermal coupling element (15).

3. Frame structure according to claim 1 or 2, wherein the frame profile of the sash or leaf frame (2) consists of wood, rigid integral foam, GRP, CRP or thermoplastic material, in particular PVC, PP or PA, or of a composite profile made of wood and rigid foam or of a composite profile made of thermoplastic material and rigid foam.

4. Frame structure according to any of the preceding claims, **characterised in that** the insertion depth (S3) of the vacuum insulated glass unit (1) is between 15 mm and 25 mm.

5. Frame structure according to any of the preceding claims, further comprising an insulating element (12) that is arranged on the exterior side in the region of the insertion depth of the vacuum insulated glass unit (1).

6. Frame structure according to any of the preceding claims, **characterised in that** the thermal coupling element (5) comprises metal at least in regions and is preferably a glazing bead (5) made of aluminium.

7. Frame structure according to any of claims 1 to 5, **characterised in that** the thermal coupling element (15) is aluminium foil, with which the glazing bead or rebate (5) is covered.

8. Frame structure according to any of the preceding claims, **characterised in that** the thickness of an outer seal (4) in the heat flow direction is at least 50% greater than the thickness of an inner seal (6).

9. Building envelope comprising a frame structure according to any of the preceding claims.

## Revendications

1. Structure formant cadre pour une fenêtre, une porte ou un vitrage fixe, comprenant :
- un profilé de cadre (2, 3), dont le matériau possède une conductivité thermique inférieure à 1,0 W/mK, et
- qui comprend un cadre de vantail (2) et
- un cadre de dormant (3) ;
- une unité (1) formant vitrage isolant sous vide maintenue dans une feuillure (S3) de la structure formant cadre ;
- l'unité (1) formant vitrage isolant sous vide possède un coefficient de transfert thermique Ug d'au plus 1,0 W/(m²K) ;
**caractérisée en ce que**
- la structure formant cadre comprend côté pièce, dans la zone de la feuillure, un élément thermique de couplage (5 ; 15) ayant une conductivité thermique augmentée d'au moins un facteur 10, et de manière préférée d'un facteur 20 et de manière particulièrement préférée une conductivité thermique augmentée d'un facteur 300, par rapport au matériau du profilé de cadre du cadre de vantail (2) ; et
- une épaisseur d'isolant (S1) extérieure dans le sens du flux thermique est supérieure au moins d'un facteur 3, de manière préférée d'un facteur 4, à l'épaisseur (S2) d'un joint intérieur (6).

2. Structure formant cadre selon la revendication 1, dans laquelle la structure formant cadre présente une butée côté pièce, qui est prévue sous la forme d'une baguette (5) ou d'une butée fixe, dans lequel la butée côté pièce comprend l'élément de couplage (15) thermique.

3. Structure formant cadre selon la revendication 1 ou 2, dans laquelle le profilé de cadre du cadre de vantail (2) se compose de bois, de mousse intégrale rigide, de PRV, de plastique renforcé par des fibres de carbone ou de matière synthétique thermoplastique, en particulier se compose de PVC, PP ou PA, ou se compose d'un profilé composite de bois et de mousse rigide ou d'un profilé composite de matière synthétique thermoplastique et de mousse rigide.

4. Structure formant cadre selon l'une des revendications précédentes, **caractérisée en ce que**
la feuillure (S3) de l'unité (1) formant vitrage isolant sous vide est entre 15 mm et 25 mm.

5. Structure formant cadre selon l'une des revendications précédentes, comprenant de plus un élément isolant (12), qui est disposé dans la zone de la feuillure de l'unité (1) formant vitrage isolant sous vide.

6. Structure formant cadre selon l'une des revendications précédentes, **caractérisée en ce que**
l'élément de couplage (5) thermique comprend au moins par endroits du métal et de préférence est une baguette (5) d'aluminium.

7. Structure formant cadre selon l'une des revendications 1 à 5,
**caractérisée en ce que**
l'élément de couplage (15) thermique est une feuille d'aluminium, avec laquelle la baguette ou la butée (5) est revêtue.

8. Structure formant cadre selon l'une des revendications précédentes, **caractérisée en ce que**
l'épaisseur d'un joint externe (4) dans le sens du flux thermique est supérieure de 50 % minimum à l'épaisseur d'un joint intérieur (6).

9. Enveloppe extérieure comprenant une structure formant cadre selon l'une des revendications précédentes.
